# EUROPEAN PATENT APPLICATION

(11) **EP 1 870 234 A1**
(43) Date of publication of application: **26.12.2007**
(21) Application number: 05780418.9
(22) Date of filing: 17.08.2005
(51) Int. Cl.: B32B 27/00, B05D 7/24

(54) **RESIN SHEET WITH FINE DECORATIVE PATTERN AND PROCESS FOR PRODUCING THE SAME**

(30) Priority: 14.04.2005 JP 2005116990
(71) Applicant: Hitech Co., Ltd, Tokyo 184-0013 (JP); Curling Creative Consult Inc., Tokyo 170-0013 (JP); Murata, Nozomu, Tokyo 192-0023 (JP)
(72) Inventor: MURAYAMA, Hideya, Koganei-shi, Tokyo 1840013 (JP); OONO, Takaharu, c/o CURLING CREATIVE CONSULT Inc., Toshima-ku, Tokyo 1700013 (JP)
(74) Representative: HOFFMANN EITLE
(86) International application number: PCT/JP2005/015021
(87) International publication number: WO 2006/112044

(57) **Abstract**

The present invention provides a resin sheet having fine decorative patterns and a method of readily producing the resin sheet having fine decorative patterns.

The present invention is **characterized by** a resin sheet having fine decorative patterns. The resin sheet is consisted of a transparent resin sheet and a three dimensional cured resin layer laminated thereon, and the decorative patterns are formed on the three dimensional cured resin layer. Any characters and numbers are transparently printed on the surface of the transparent resin sheet and the three dimensional cured resin layer by silk printing, and the surface may be tinted by silk printing. The resin sheet having fine decorative patterns may be produced by stacking a metal plate having decorative patterns thereon, a three dimensional cure resin, and a transparent resin sheet in this order, by radiating exciting rays such as UV light and X-ray, or by heating, from the side of the transparent resin sheet to cure the three dimensional cure resin, and then by peeling off from the metal plate.

## Description

### TECHNICAL FIELD

The present invention relates to a resin sheet having fine decorative patterns and a method of producing the same. The resin sheet having fine patterns appeals the beauty by the appearance, enhances the designability, and improves the value and use thereof. The resin sheet having fine decorative patterns may be suitably used in for example an instrument panel of automobiles, indicator panel of electric or electronic devices, housing of electric or electronic devices, dial plate of clocks, and advertising display panels.

### BACKGROUND ART

The resin sheet used in for example an instrument panel of automobiles, indicator panel of electric or electronic devices, housing of electric or electronic devices, indicator panel of clocks, and advertising display panels are devised so as to improve the beautiful appearance by forming fine decorative patterns. The term "resin sheet" used herein refers to any substrate including the thick plates and thin films. In general, a sheet is distinguished from a film by its thickness. Usually a sheet has the thickness of 0.2 mm or more and a film has the thickness of less than 0.2 mm (the Basics of Plastic Processes, Japan Society of Polymer Science, 1982). Fine decorative patterns used herein is referred to as subtle patterns and designs for decorative use, including woodgrain patterns, character patterns, line art patterns such as spin and hairline finishes, and among others to as any fine textures having the interval of less than or equal to 5 mm between two lines or elements that constitute the pattern. The fine decorative patterns as cited above may be formed on a sheet substrate made of some metals by machining work, readily and on the industrial scale. However it is fundamentally difficult to form any fine decorative patterns on a resin sheet by machining work.

To form decorative patterns, in general, machining process is applied. More specifically, a circular grinding wheel is attached on the tip of a drill, and the drill is rotated at a high speed to turn the grinding wheel attached to the drill at the high speed, while at the same time the grinding wheel is pressed onto the substrate or sheet at a constant pressure to form fine decorative patterns on the surface of the substrate or sheet. In fact the formation of fine decorative patterns on a metallic sheet by applying the machining process is routinely performed. However, if this method is applied to a resin sheet, there arises a problem that hair-like shaving chips scraped away by the grinder wheel remains thereon. In practice the hair-like chips requires a considerable effort to be removed, and there is no simple removal method. The machining process causes also a problem of losing the transparency of resin sheets. The loss of transparency causes another problem of deteriorating the reproducibility of colors when printing.

There is a known method of obtaining a resin plate having patterns formed thereon by using a die engraved with patterns to perform an injection molding or extrusion molding (for example, see patent specification JP-A-2003-1705). This method suffers from a problem that the patterns may not be transferred accurately onto the resin if the patterns are very subtle. As the viscosity of resin at the time of molding is relatively high, it is thought that the injection molding or extrusion molding is not preferable for the application of fine patterns. In addition, there also is still another problem of cost that the production of molding die is expensive. The injection molding or extrusion molding therefore are applied in some limited cases that simple patterns are formed. Furthermore, the resin surface having patterns formed by the injection molding or extrusion molding is not hard coated so that the fragile patterns formed thereon are easily scratched.

There is another method of transferring texture patterns on a glass substrate to UV cure paint by preforming relief textures on a glass substrate, laminating thereon UV cure paint and a resin plate such as polycarbonate, irradiating UV light from the glass plate side or resin side (see patent specification JP-A-H8-99327). In this method simple patterns can be transferred, however since it is difficult to form fine decorative patterns on a glass substrate, any glass substrates cannot be used if fine decorative patterns are desired. In addition, there is a problem that in case a glass substrate is used, when peeling the resin plate off the glass after curing the UV resin paint, the glass substrate breaks.

In addition, there is a method of producing a resin plate, disclosed in JP-A-2000-158599, having the property of non-glare, antistaining, anti-static effects, and used on the top of optical components in a display manufactured in the process comprising the steps of (a) applying UV cure type resin layer on one surface of a resin substrate, (b) forming a transfer sheet on a film substrate, (c) superpose the UV cure type resin layer formed in the above (a) process on the transfer sheet formed in the above (b) process to cure said resin layer by the UV light radiation from the side of said transfer sheet and to laminate the resin plate and transfer sheet through the resin layer, and (d) peeling off said transfer sheet. This method, however, is for transferring the texture patterns that promote light reflection from the film surface, and not for transferring fine decorative patterns. As have been described above, it is very difficult to form fine decorative patterns on a resin sheet, and it is also very difficult to form fine decorative patterns on a resin sheet by applying any of known methods.
Patent reference 1: JP-A-2003-1705
Patent reference 2: JP-A-H08-99327
Patent reference 3: JP-A-2000-158599

### DISCLOSURE OF THE INVENTION

### THE PROBLEM TO BE SOLVED BY THE INVENTION

The present invention has been made in view of the above circumstances and has an object to provide a method of producing a resin sheet having formed thereon fine decorative patterns such as woodgrain patterns, character patterns, and line art patterns including spin and hairline finishes as well as a resin sheet having fine decorative patterns. A resin sheet having fine decorative patterns formed thereon may enhance the designability, as well as prove effective on the improved commercial value and use in an instrument panel, indicator panel, housing of diverse devices, advertising billboards and the like, and in particular in the instrument panel of automobiles, indicator panel of electric or electronic devices, housing of electric or electronic devices, indicator panel of clocks, advertising display panels and so on. So far the formation of fine decorative patterns has been relied on machining work, when a resin sheet is used, hair-like shaving chips remain thereon and requires some considerable efforts to be removed therefrom, making the formation of fine decorative patterns on a resin sheet very difficult.

### MEANS FOR SOLVING THE PROBLEM

The present invention provides a resin sheet having fine decorative patterns. The resin sheet having fine decorative patterns is a resin sheet with three-dimensional cured resin layer laminated on a transparent resin sheet, the fine decorative patterns being formed on the three-dimensional cured resin layer. Some concrete examples of fine decorative patterns include, woodgrain patterns, character patterns, and line art patterns drawn by a plurality of lines. Line art patterns can be preferably used which are constituted by a plurality of similar figures drawn by lines. The fundamental patterns of said similar figures may be selected from the group of closed line drawing patterns consisted of circle, ellipse, triangle, quadrilateral, pentagon, polygon, and star. The closed line drawings of triangle, quadrilateral, pentagon, polygon, and star may be line arts having a side drawn by a straight line, outwardly convex arc, or inwardly concave arc. The line art patterns may be of spin or hairline patterns. In addition, the line art patterns are preferably the fine line drawings having the depth of groove from 20 nm to 5 microns drawn by a plurality of lines.

Three-dimensional cured resin layer is made of three-dimensional cure paint cured by irradiating the exciting rays such as UV light and X-ray radiation or by heat. UV cure resin cured by irradiation of UV light is preferably used. The transparent resin sheet may be preferably selected from the group consisted of acrylic sheet, polycarbonate sheet, polyester sheet, and polystyrene sheet.

Characters and numbers can be transparently printed by silk screen printing on the surface of the transparent resin sheet having fine decorative patterns applied. In addition, the transparent resin sheet can be tinted by silk printing in a similar manner, and the sheet can be tinted by silk printing after transparently printing characters or numbers. After metal disposition on the transparent resin sheet surface, laser beam may be used to partly remove the metal deposited film to form transparent characters and numbers. At this point the tree dimensional cured resin layer may be applied on the surface transparently printed or transparently processed or on the surface not transparently processed.

The above description refers to the transparent printing on the transparent resin sheet surface of the resin sheet having fine decorative patterns. However the side of three dimensional cured resin layer may also be transparently printed. More specifically, the resin sheet can have fine decorative patterns of characters and numbers transparently printed by silk printing with mirror ink of silver and/or gold on the three dimensional cured resin layer. After transparently printing characters and numbers by silk printing with mirror ink of silver and/or gold on the three dimensional cured resin layer, the transparent resin sheet can be hard coated. The hard coating of transparent resin sheet protects the transparent resin sheet surface, which is on the surface and is easily scratched, if not protected. The hard coating can be performed by applying three dimensional cure paint and curing the paint.

The above description refers to the transparent printing and tinting after formation of three dimensional cured resin layer on a transparent resin sheet. The transparent resin sheet can be printed, tinted prior to forming the three dimensional cured resin layer on the transparent resin sheet, then the three dimensional cured resin layer may be formed thereon. More specifically, characters and numbers are transparently printed by silk printing on the transparent resin sheet surface, and then the three dimensional cured resin layer is formed on the surface having transparently printed or not printed. When forming the three dimensional cured resin layer after transparently printing in advance the transparent resin sheet, the three dimensional cured resin layer is allowed to be formed either on the transparently printed surface or on the surface not printed. The transparent resin sheet surface may be further tinted by silk printing. Although the side to be tinted is preferably the surface that has transparently printed, the printing is not limited thereto.

The resin sheet having such fine decorative patterns is widely used in an instrument panel or indicator panel. When using the resin sheet having fine decorative patterns in an instrument panel or indicator panel, the instrument panel or indicator panel can be backlit from its backside, namely the backside of the resin sheet having fine decorative patterns to facilitate the readability.

The instrument panel or indicator panel is preferably used as the instrument panel or indicator panel equipped in motorcycles, automobiles, or electric and electronic devices. The resin sheet having fine decorative patterns may be used for the housing of electric or electronic devices, dial plate of clocks, and advertising displays. Furthermore the resin sheet is suitably used in a cellular phone as an electric or electronic device.

The resin sheet having fine decorative patterns in accordance with the present invention may be formed by laminating a metal plate having fine decorative patterns thereon, three dimensional cure paint, and a transparent resin sheet thereon in this order, irradiating excitation rays such as UV light and X-ray radiation or heating to cure the three dimensional cure paint, and then peeling off the sheet from the metal plate. Here as for the transparent resin sheet, any one selected from the group consisted of acrylic sheet, polycarbonate sheet, polyester sheet, and polystyrene sheet can be used. As for the metallic plate for transferring the fine decorative patterns, any one selected from the group consisted of aluminum plate, copper plate, stainless steel plate, and iron plate can be used. For the three-dimensional cure paint for forming the fine decorative patterns, UV cure paint is among others preferably used, and the UV cure paint is preferably used which includes origomers (resin) of urethane acrylate and monomers of acrylate.

Fine decorative patterns such as spin patterns are created by machining work on a metallic plate such as aluminum plate, copper plate, and stainless steel plate. The fundamental of the present invention is to use the metallic plate having fine decorative patterns thereon as the imprinting master to transfer the fine decorative patterns to a resin sheet to obtain a resin sheet having fine decorative patterns. More specifically, three.dimensional cure paint is applied on the surface of the metallic plate having fine decorative patterns such as spin patterns formed by machining work, and a transparent resin sheet is put over thus applied three dimensional cure paint to make a lamination. From the side of the transparent resin sheet excitation rays such as UV light and X-ray radiation is irradiated thereto or the lamination is heated to cure the three dimensional cure paint. At the time when the three dimensional cure paint is cured, the fine decorative patterns formed on the metallic plate are transferred to the three dimensional cured resin layer (cured three dimensional cure resin paint). The cured resin will adhere to the transparent resin sheet and not to the metallic plate. After the three dimensional cure resin is cured the resin sheet is peeled off from the metallic plate. Since the three dimensional cure resin layer thus cured is not adhered to the metallic plate but is adhered to the transparent resin sheet, the three dimensional cured resin layer having fine decorative patterns formed thereon will be peeled off from the metallic plate, together with and adhered to the transparent resin sheet. In this manner a resin sheet having fine decorative patterns can be obtained.

### EFFECT OF THE INVENTION

Hitherto, it has been difficult to form fine decorative patterns such as spin patterns on a resin sheet. The present invention overcomes the problems and allows fine decorative patterns to be formed on a resin sheet, improving the surface hardness of the resin sheet to thereby achieve a scratch-free property. In other words, decorative patterns are formed on the three dimensionally cured resin to serve as the protection from scratching of the resin sheet surface. The three dimensionally cured resin may play the role of so-called hard coating. As can be seen from the foregoing, the present invention provides a resin sheet having fine decorative patterns formed thereon such as spin patterns and the like, which may be proven effective in the enhancement of designability of and the improvement of the commercial value and use of any instrument panel, indicator panel, housing of electric or electronic devices, dial plate of clocks, and advertising display panels. In addition, silk printing on the resin sheet surface on which the fine decorative patterns are formed, namely, transparent printing of characters and numbers, such that, more specifically, characters and numbers are transparent and any other area are tinted to for example black, silver, gold, and so on, allows the enhancement of designability of and the improvement of the commercial value and use of the indicator panels. The screen printing to tint the resin sheet having fine decorative patterns formed thereon to any desired color additionally allows the enhancement of designability and the improvement of the commercial value and use. The color to be tinted on the resin sheet is not limited to those colors such as black, silver, or gold. It is to be noted here that any desirable color can be selected appropriately.

### BRIEF DESCRIPTION OF THE DRAWINGS

Fig. 1 shows an exemplary structure of a resin sheet having decorative patterns;
Fig. 2 shows an example of apparatus for producing a resin sheet having decorative patterns;
Fig. 3 shows a cross-sectional view of the apparatus shown in Fig. 2;
Fig. 4 shows an example of decorative patterns (spin patterns);
Fig. 5 shows another example of decorative patterns (hairline patterns);
Fig. 6 shows still another example of decorative patterns (character patterns);
Fig. 7 shows yet another example of decorative patterns (woodgrain patterns);
Fig. 8 shows an embodiment in accordance with the present invention, used in an instrument panel of an automobile;
Fig. 9 shows another embodiment in accordance with the present invention, used in an instrument panel of an automobile;
Fig. 10 shows still another embodiment in accordance with the present invention, used in an instrument panel of an automobile;
Fig. 11 shows an example of line art patterns, with each side of polygon drawn by a straight line;
Fig. 12 shows an example of line art patterns, with each side of polygon drawn by an outward arc;
Fig. 13 shows an example of line art patterns, with each side of polygon drawn by an inward arc;
Fig. 14 shows an embodiment in accordance with the present invention, used in the periphery of the display panel of a cellular phone;
Fig. 15 shows an embodiment in accordance with the present invention, used in the housing of an air-conditioner;
Fig. 16 shows an embodiment in accordance with the present invention, used in the housing of a telephone;
Fig. 17 shows an embodiment in accordance with the present invention, used in the button display panel of a cellular phone; and
Fig. 18 shows an example of the present invention used in a logo mark.

### REFERENCE NUMERALS

- 1: UV lamp
- 2: transparent resin sheet
- 3: three dimensional cure resin layer
- 4: metal plate with fine decorative patterns
- 5: clamp
- 6: workbench
- 7: patterns
- 11: figures in an automobile meter panel
- 13: meter panel with formed decorative patterns

### BEST MODE FOR CARRYING OUT THE INVENTION

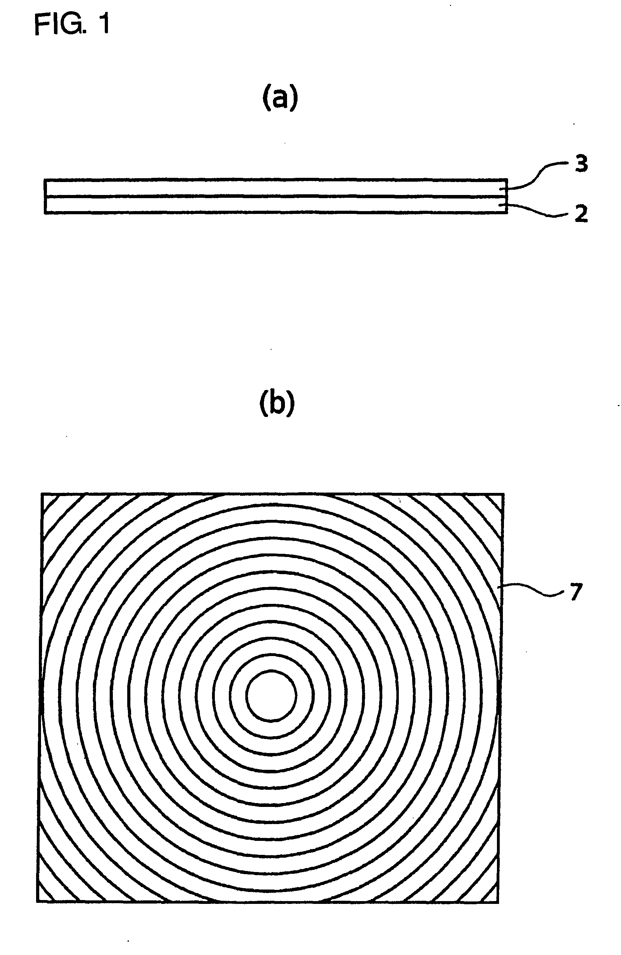

The present invention will be described herein below referring to some embodiments thereof. The invention is to be considered not to be limited thereto. First, fine decorative patterns to be transferred to a resin sheet are formed on a metallic plate such as aluminum plate, copper plate, stainless steel plate, and iron plate. More specifically, for example, machining oil is applied to the entire surface of an aluminum plate and a grinding wheel disk is attached to the tip of a drill to rotate the disk at high speed, then the grinding disk of the drill is pressed on the aluminum plate surface at a constant pressure. To the extent where the grinding disk is in contact with the plate, spin patterns, for example, of fine curvature will be formed. In order to form many patterns, the aluminum plate is slid so that a number of spin patterns are formed on the entire surface. It is needless to say that the decorative patterns can be formed on the metal plate made of copper, stainless steel, or iron. Fig. 1 shows a preferred embodiment of a resin sheet having the fine decorative patterns as described above, which are obtained by using a metallic plate having fine decorative patterns thereon and by transferring the patterns to the resin sheet. In Fig. 1 there are provided a side view and a plan view. As can be seen from the side view, the resin sheet in accordance with the present invention is made of a transparent resin sheet 2 and a three dimensional cured resin layer 3 formed thereon, fine decorative patterns 7 are provided on the surface of the three dimensional cured resin layer. In Fig. 1 spin patterns are formed on the surface of the three dimensional cured resin layer.

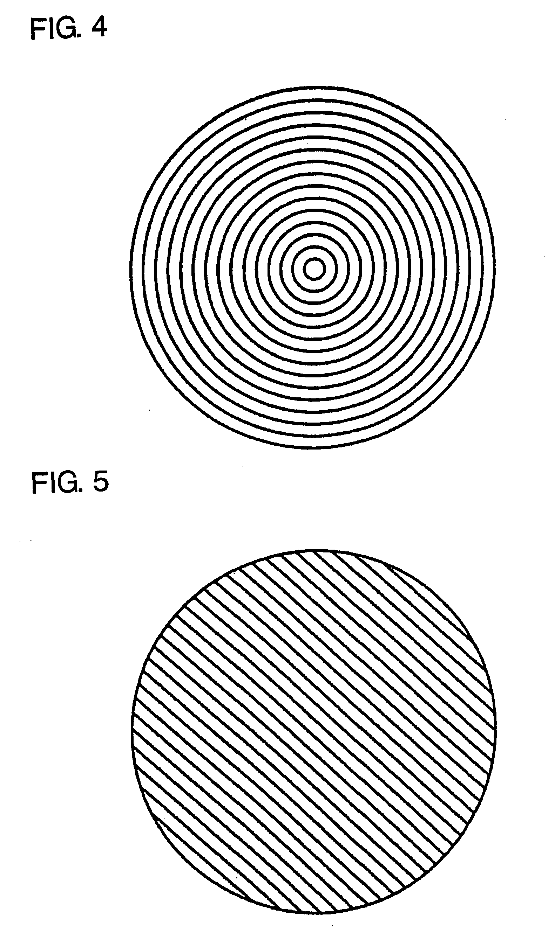

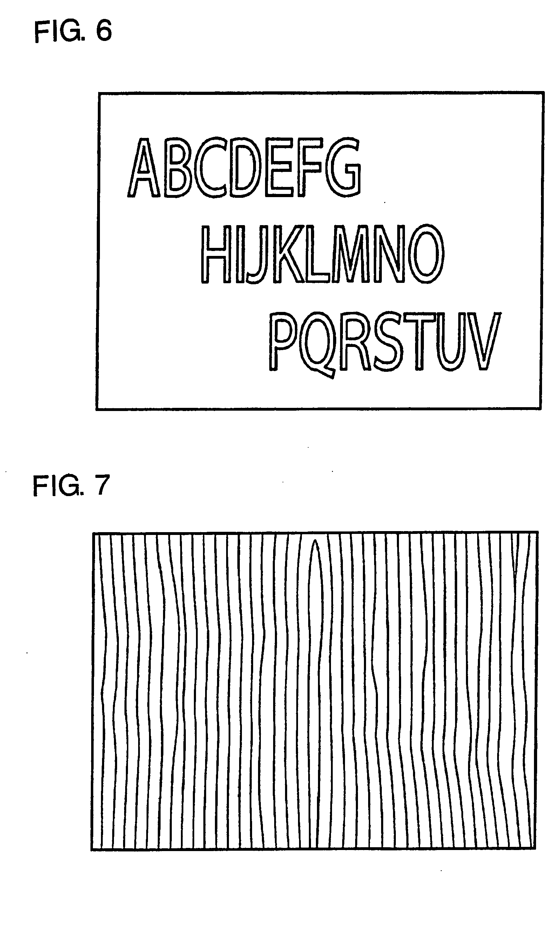

As some examples of fine decorative patterns, Fig. 4 shows spin patterns, Fig. 5 shows hairline patterns, Fig. 6 shows character patterns, and Fig. 7 shows woodgrain patterns. Line art patterns are patterns drawn with a plurality of lines. Some typical examples of the conventional line art include spin patterns (c.f. Fig. 4) and hairline patterns (c.f. Fig. 5). The present invention is capable of suitably producing any other line art patterns than the spin and hairline works. In particular, the line art patterns made of a plurality of similar figures are preferably formed. Preferably, the line art patterns made of a plurality of similar figures are such that the fundamental form of the similar figures are made of closed line art forms such as for example circle, ellipse, triangle, quadrilateral, pentagon, polygon, and star. These closed line art figures in the form of circle, ellipse, triangle, quadrilateral, pentagon, polygon, and star, every side may be drawn by either a straight line, outward arc, or inward arc.

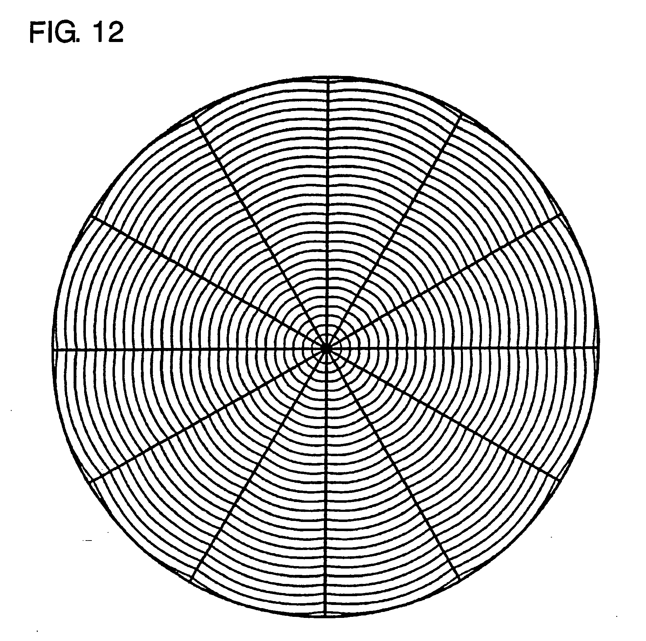

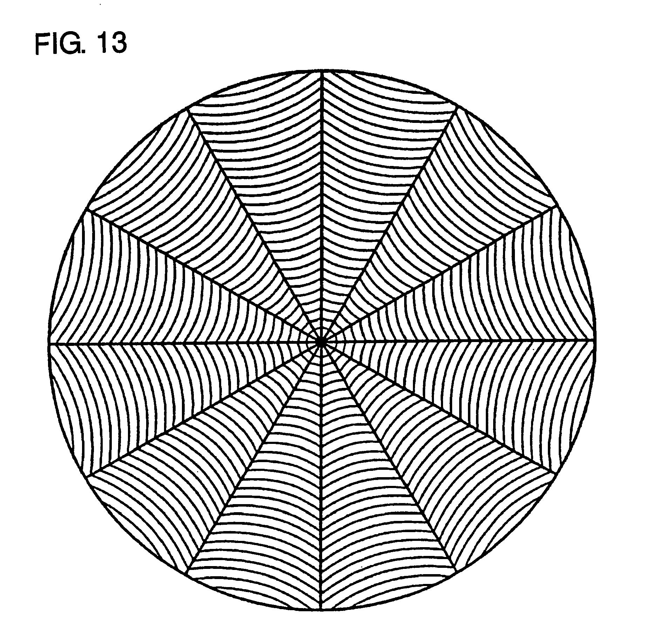

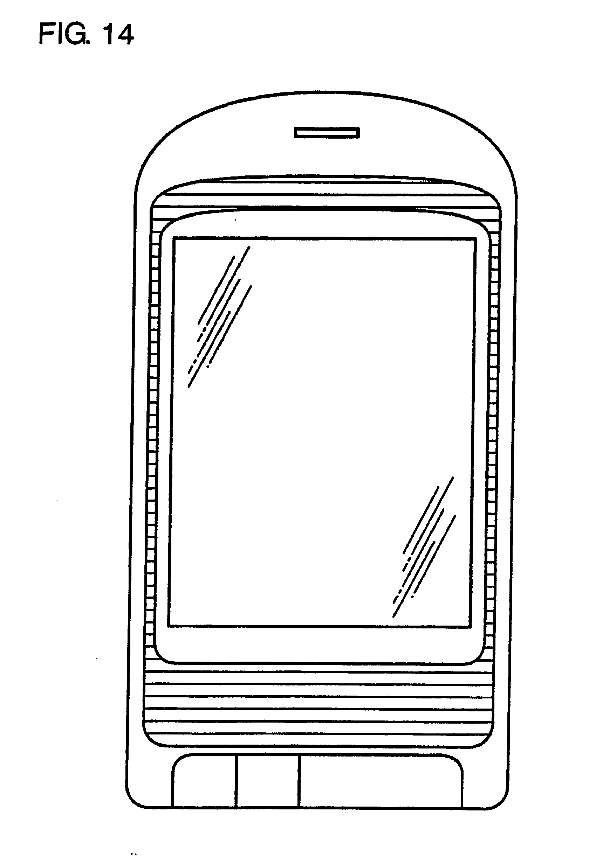

As an example, exemplary dodecagonal patterns will be described. Fig. 11 shows an example of line art patterns of dodecagon, with every side drawn by a straight line. The dodecagon in this case is an usual dodecagon. In Fig. 12 another example of line art patterns of dodecagon with every side drawn by an outward arc. Each side is drawn by a curve outwardly expanded of the dodecagon, namely by an outward arc. In Fig. 13 still another example of line art patterns of dodecagon, with every side drawn by an inward arc. Each side is drawn by a curve inwardly expanded of the dodecagon, namely by an inward arc. Although Figs. 11 to 13 show some dodecagons, any other figures including circle, ellipse, triangle, quadrilateral, pentagon, polygon, and star may be formed in a similar manner.

The line art patterns in accordance with the present invention are preferably made of line groove of depth of 20 nm to 5 microns in the line art patterns in order to draw fine line art patterns. It should be noted here that the line art patterns drawn with line groove of depth of 20 nm to 5 microns are not accomplished by injection molding or extrude molding, and are only achieved by the present invention.

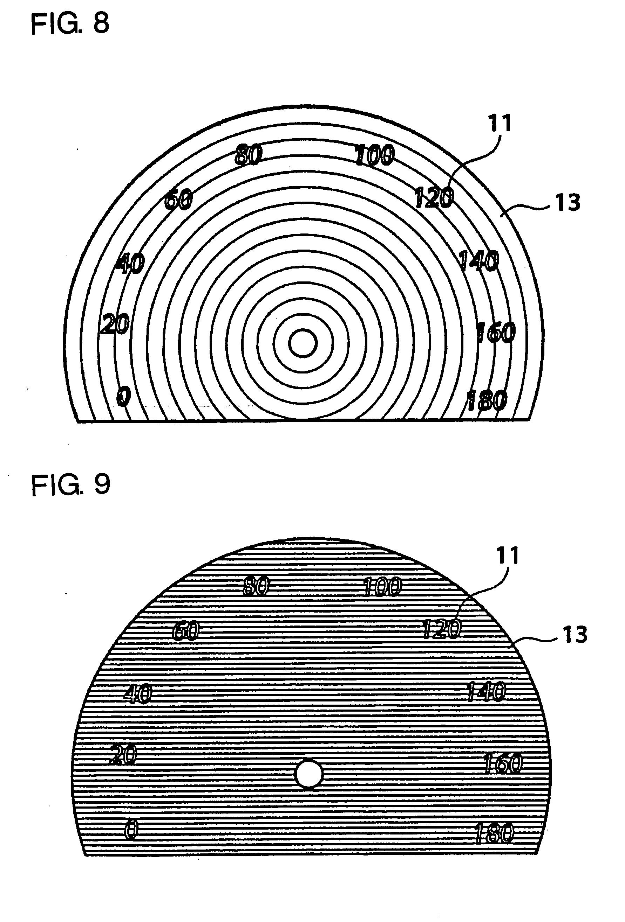

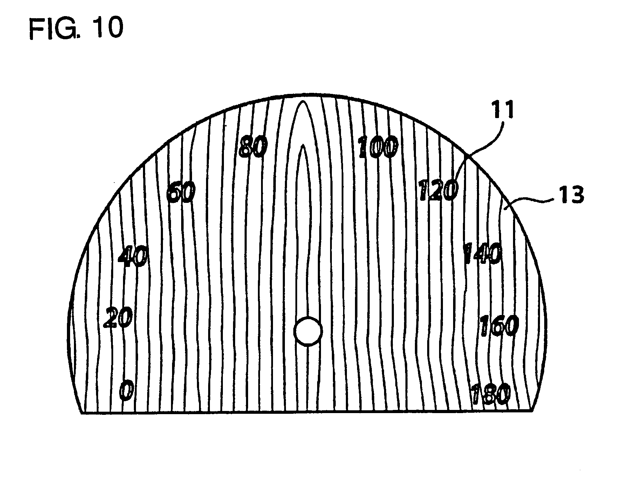

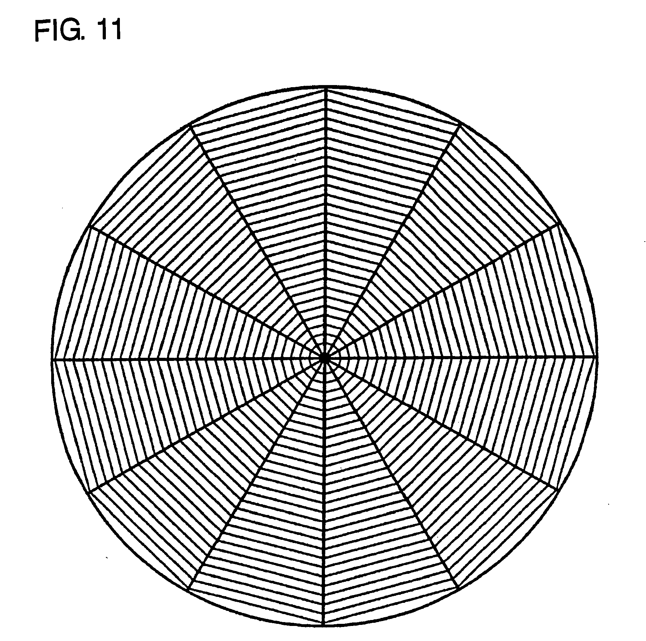

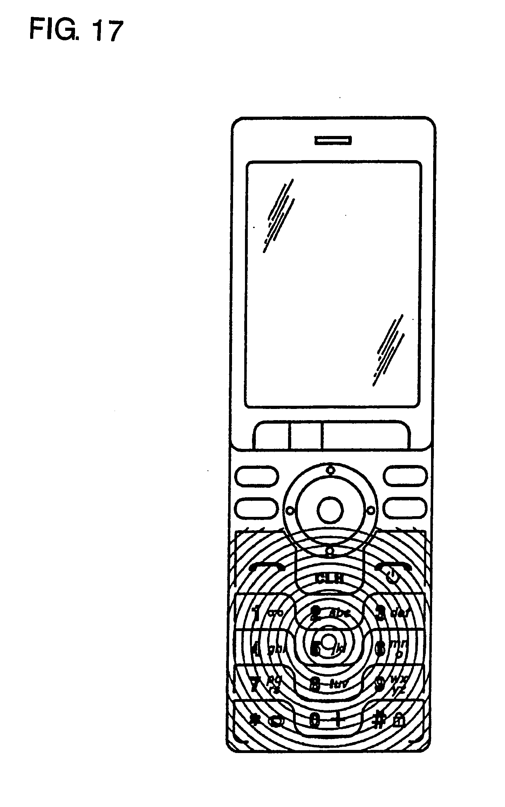

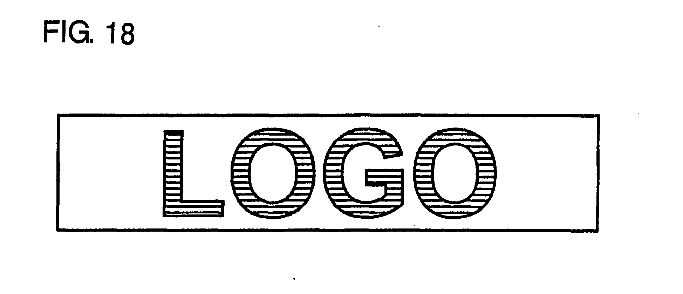

The resin sheet having fine decorative patterns applied in accordance with the present invention may be used in many purposes. The sheet is suitably used as the instrument panel and indicator panel. The sheet is in particular suitably used as instrument panel and indicator panel equipped in motorcycles, automobiles, electric and electronic devices and so on. Some embodiments of the resin sheet having fine decorative patterns applied in accordance with the present invention for the use in the instrument panel of automobile are shown in Fig. 8 to Fig. 10. Fig. 8 illustrates spin patterns, Fig. 9 illustrates hairline patterns and Fig. 10 illustrates woodgrain patterns. The sheet in addition may be used in the housing of electric or electronic devices, the indicator panel of clocks, and advertising display panels. Other embodiments of the resin sheet used in the housing of cellular phone as the examples of electric and electronic devices are shown in Fig. 14 and Fig. 17. The dodecagonal line art patterns shown in Fig. 11 to Fig. 13 may also be suitably applied to the dial plate of clocks. The sheet can be used for the indication of logo, as shown in Fig. 18.

As have been described above, the resin sheet having the fine decorative patterns applied in accordance with the present invention is suitably used in many instrument panels, indicator panels and the like. It will be effective to print characters and numbers on the resin sheet and in addition tint the sheet when using in an instrument panel or indicator panel. More specifically, the characters and numbers are transparently printed by silk printing on the backside of resin sheet, namely on the surface of three dimensional cured resin layer of the transparent resin sheet. Then the surface of transparent resin sheet is tinted by silk printing as required. The transparent printing herein means that the characters and numbers are transparent, and any other areas are printed in black, silver, and so on. The transparent printing may be proven effective in the enhancement of the designability, and the improvement of the commercial value and use of such indicator panel. Furthermore, tinting by the transparent screen printing with any color on the transparent resin sheet surface of the resin sheet having fine decorative patterns allows the enhancement of the designability of, and the improvement of the commercial value and use of such indicator panel. It is to be noted that the color to be tinted on the resin sheet should be considered not to be limited to such colors as black and silver, but may be selected appropriately, such as red, blue, yellow, and any other colors.

In order to accomplish the printing and transparent printing on the resin sheet having fine decorative patterns there are many solutions. These solutions will be described in greater details herein below. First method is to transparently print and tint the surface of the transparent resin sheet, in the resin sheet having a three dimensional cure resin layer laminated on a transparent resin sheet. In this method the transparent resin sheet side of the finished resin sheet is transparently printed or tinted by screen printing. This is the simplest and most popular method.

Second method is to transparently print on the three dimensional cure resin layer side, in the resin sheet having the three dimensional cure resin layer laminated on an transparent resin sheet. The ink used in the transparent printing in this case is the mirror ink of silver and/or gold. It is not desirable to perform transparent printing or tinting with any ink other than the mirror ink, because the fine decorative patterns formed on the three dimensional cured resin layer are likely masked by the printing ink. When transparently printing on the three dimensional cured resin layer, the transparent resin sheet side is to be used for the front face. In other words, for example, the characters on the instrument panel are seen from the side of transparent resin sheet. In contrast thereto, as an usual manner, when transparently printing and tinting on the transparent resin sheet side of the resin sheet having fine decorative patterns, for example, the characters on the instrument panel are observed from the three dimensional cured resin layer side. In this case the surface is prone to be scratched because the transparent resin sheet side is used in the front face, it is desirable to protect the surface by providing a hard coat on the transparent resin sheet. The hard coat, as have been described above, can be achieved by applying and curing three dimensional cure resin paint.

Third method is to transparently print and tint previously on the transparent resin sheet surface and then laminate a three dimensional cured resin layer on thus finished transparent resin sheet. More specifically, characters and numbers are transparently printed on a side of the transparent resin sheet by silk printing, then a three dimensional cure resin layer is applied on either the transparently printed side or the side that has not been transparently printed. The side to apply the three dimensional cure resin layer may be either the side that the transparent printing was done or the side that the transparent printing was not done. In addition to transparent printing, tint can be done. The side to be tinted is preferably that has been transparent printed, however is not limited thereto.

Alternative to the silk printing, metal deposition can be provided to the backside of the resin sheet. The metal deposition will provide the appearance of titanium tone or stainless steel tone with the decorative patterns. In this case, different from the silk printing, it is difficult to render the characters and numbers transparent. In order to render the characters and numbers transparent, laser process and the like after the metal deposition is used to work the transparency on the characters and numbers. More specifically, laser beam is irradiated to the extent of characters and numbers to eliminate the deposited metal film so as to render the characters and numbers transparent. As a result the characters and numbers will be rendered transparent.

In the instrument panel and indicator panel, the characters and numbers are transparent-printed on the side of transparent resin sheet and appropriately tinted, illuminate the sheet from the backside so as to appear the characters and numbers on the resin sheet. For example, in Fig. 8 to Fig. 10, by printing in silver color any other areas than the numbers that are intact transparent, numbers 0, 20, ..., 180 will appear on the instrument panel by the backlight illumination. The instrument panel shown in Figs 8 to 10 is a speed indicator suitably used in an automobile. On the resin sheet of the speed indicator, spin patterns (Fig. 8), hairline patterns (Fig. 9), and woodgrain patterns (Fig. 10) are drawn.

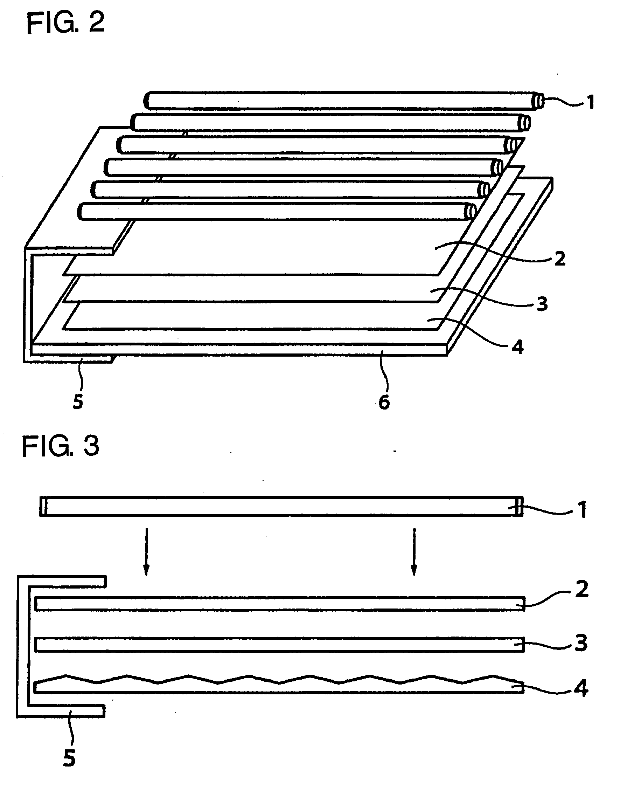

Fine decorative patterns include many design patterns. For example, other than the decorative patterns such as woodgrain patterns and character patterns, there are line art patterns such as spin patterns and hairline patterns. By using a metal plate such as an aluminum plate with decorative patterns being formed thereon, fine decorative patterns such as spin patterns may be transferred to form on a resin sheet. A method of producing a resin sheet having such fine decorative patterns will be described in greater details herein below with reference to Fig. 2 or Fig. 3. Fig. 2 shows an embodiment of apparatus, as an example, in which spin patterns are formed on the UV cure resin layer. Fig. 3 shows the cross-sectional view of the apparatus. A metal plate 4 such as an aluminum plate, having fine decorative patterns formed on the surface thereof, is fixed on a machining workbench 6, three dimensional cure coating 3 then is uniformly applied on the surface of the metal plate 4 such as aluminum plate. A transparent resin sheet 2 is placed over the three dimensional cure resin coating 3. The three dimensional cure coating should be selected so as not to be adhered to the metal plate but to the resin sheet. Then the metal plate 4 with decorative patterns, the cure coating 3 and the transparent resin sheet 2 are stacked to be applied with a constant and uniform pressure. In the course of the application of constant and uniform pressure, excitation rays such as for example ultraviolet light emitted from an UV lamp 1 is irradiated from the upper surface of the transparent resin sheet 2. The radiation of UV light causes the cure resin to be cured. The decorative patterns formed by machining work on the aluminum plate will then be transferred to thus cured resin. Once the cure coating is hardened, the resin sheet can be peeled off the aluminum plate. As have been described above, the cure coating will adhere not to the metal plate but to the resin sheet, so that fine decorative patterns will be formed on the resin sheet. The cure coating will also be served as the hard coat, allows protecting from scratches. The transparent resin sheet can be made of acrylic sheet, polycarbonate sheet, polyester sheet, and polystyrene sheet. The metal plate can be made of aluminum plate, copper plate, stainless steel plate, and iron plate, as discussed earlier.

Those three dimensional cure coating which may be cured by the UV light or X-ray radiation, or by the heat are appropriately used. The UV cure coating, among others, is preferable. No-solvent type three dimensional cure coating is desirable, which is consisted of the mixture of any of origomers, polymers, monomers, and multi-functional monomers. The polymers produced by such reactions as polyaddition reaction and addition polymerization of epoxy resin and polyurethane are usable.

Preferable UV cure coating usable in accordance with the present invention may be no-solvent, three dimensionally cured by UV light. More preferable UV cure coating may be UV cured, no-solvent type, which has an adequate pot life and shorter curing time. More specifically, some examples include, those monomers and origomers having more than two acryloyl groups or metacryloyl groups in a molecule, comprising: polyol acrylates such as pentaerythritol tetraacrylate, dipentaerythritol hexaacrylate, glycerol triacrylate, butanediol diacrylate, and bisphenol-A diacrylate; reactive origomers such as urethane acrylate origomer, epoxy acrylate origomer, and ester acrylate origomer; monomers such as cyclohexyl acrylate, furfuryl acrylate, 2-ethylhexyl acrylate, 2-hydroxy-(meta)-acrylate, 2-hydroxy-propyl-(meta)-acrylate, 1,3-butanediol-(meta)-acrylate, 1,6-hexandiol-(meta)-acrylate, neopentylglycol di-(meta)-acrylate, neopentylglycol di-(meta)-acrylate hydroxy bivaline acid ester, isobornyl-(meta)-acrylate, N-vinyl pyrrolidone, and phenoxyhexaethylene glycol-(meta)-acrylate; together with photopolymerization initiators such as benzoin, benzoin methyl ether, benzoin isobutyl ether, 2,2-dimethoxy-2-phenyl acetophenone, methyl-o-benzoyl benzoate, p-isopropyl phenyl-2-hydroxy-2-propyl ketone, benzophenone, and acetophenone.

Among those UV cure coating commercially available for surface hardening, no-solvent type resins are preferable. These coatings are applied to a metal plate having decorative patterns formed such as aluminum plate, copper plate, stainless steel plate and iron plate, by such as flow coating, roll coating, or brushing, then a transparent resin sheet such as a polycarbonate sheet, acryl sheet, polyester sheet, polystyrene sheet is put thereon to crimp together. Then, after the UV cure coating is sandwiched between the metal plate and the transparent resin sheet and spread to a homogenous thickness, UV light is irradiated to cure the coating. The UV light irradiation is from the side of resin sheet. Once the coating is cured, the resin sheet is peeled off from the metal plate. By doing this a resin sheet having fine decorative patterns will be obtained.

### EMBODIMENTS

### [ Meter panel for automobiles ]

A preferred embodiment of automobile meter panel having spin patterns will be described (corresponding to Fig. 8). An aluminum plate A1050H thickness 1.0t was used and spin patterns were machined thereon to the extent of predetermined size of automobile meter panel. The line width of grooves of concentric circles in the spin patterns was formed so as to be less than 0.2 mm, and depth less than 5 microns. The groove depth in particular may affect the transfer of patterns to the three dimensional cure resin. If the groove depth is more than 5 microns, then there will be arisen a problem of bubble formation in the course of transfer process, which problem is undesirable. The apparatus shown in Fig. 2 and Fig. 3 was used to form a resin sheet having spin patterns. First, on the aluminum plate having spin patterns machined, UV cure coating was uniformly applied. UV cure coating used in this embodiment was UVA9117, commercially available from Seiko Advance Co. Ltd, which contains base resin of urethane acrylate. Over the UV cure coating homogeneously applied, a transparent polycarbonate resin sheet of the thickness of 0.4 mm was placed. The stack of the aluminum plate having spin patterns machined, the UV cure coating, and the transparent polycarbonate resin sheet was pressed uniformly at the pressure of 5 kg load, UV light was then irradiate from the side of the transparent polycarbonate resin sheet, by using a conveyor-type, air-cooled, UV dryer of two bulbs. The irradiation conditions were: conveyor speed 4 meters/minute, output power 120 Watts, integrated amount of light 600 mJ/cm2. Once the resin was cured, the aluminum plate was peeled off from the resin sheet. In this manner the decorative patterns machined on the aluminum plate was transferred to the UV cure resin layer. Then a resin sheet having fine decorative patterns (spin patterns) was obtained. Since the patterns thus transferred was formed on the UV. cure resin layer, and UV cure resin layer is adhered to the polycarbonate resin sheet, spin patterns as a consequence is formed on a resin sheet consisted of a polycarbonate resin sheet and three dimensional cure resin layer.

On the backside of the transparent polycarbonate resin sheet of the resin sheet having spin patterns transferred (i.e. , the side that the three dimensional cure resin is not laminated), silk printing was performed such that the design characters were transparent. The silk printing was performed in this embodiment with specular ink so that the surface became specular except for the design characters. The specular ink used was 500VSP specular ink, commercially available from Seiko Advance Co. Ltd. In the silk printing process, serigraph mesh #280 was used, and the drying was 45 degrees Celsius 30 minutes in a hot-air drying furnace. When observing the spin patterns on the resin sheet having design characters transparently printed thereon through the side of formed patterns, the design characters were transparent, and the spin patterns of aluminum metal film were recognized to the extent without design characters. Additionally a backlit color may be selected by silk printing a transparent color to the transparent area of the design characters. Although a specular ink was selected in this embodiment, it is needless to say that any silk-printable color may be used for the tone of color.

Instead of silk printing, metal deposition is applicable. By performing metal deposition to the back side of the transparent polycarbonate resin sheet of the resin sheet having spin patterns transferred, a resin sheet having the appearance of titanium tone, stainless steel tone and the spin patterns can be obtained. In this case because it is difficult to transparentize the design characters after the metal deposition, the design characters can be cleared by irradiating the laser beam to the extent of design characters after metal deposition to eliminate the metal deposition film within the extent of design characters.

### [ Cellular phone ]

A preferred embodiment of the present invention of the decoration in the periphery of the display panel of a cellular phone is shown in Fig. 14. A resin sheet having hairline patterns, obtained in a similar manner to the sheet for automobile meter panel, was applied to the periphery of the display screen of a cellular phone. The resin sheet having hairline patterns was tinted o silver or black by silk printing. The resin sheet having such fine decorative patterns may be used for forming the structure of device housing, as a so-called resin plate that is relatively thick, or the resin sheet having fine decorative patterns may be adhered to the housing, which is previously and separately formed with another resin sheet (plate).

### [ Air-conditioner and telephone ]

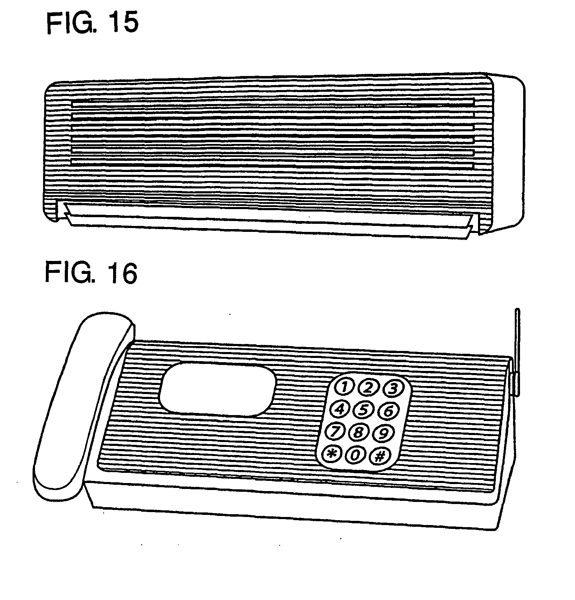

In a similar manner, the resin sheet having decorative patterns formed thereon for use in the housing of electric and electronic devices can be produced. Fig. 15 shows an embodiment used an air-conditioner, and Fig. 16 shows an embodiment used in a telephone. The embodiments uses relatively thick resin sheets (plates) with fine decorative patterns, which may form the housing of the device, in a similar fashion, or a resin sheet having fine decorative patterns may be adhered to a housing previously built by another resin sheet (plate).

### [ Button display panel of a cellular phone ]

The button display panel of a cellular phone is produced in a similar manner by using a resin sheet having spin patterns formed. Fig. 17 shows an embodiment in which spin patterns are applied to the button display panel of a cellular phone. On the backside of a polycarbonate plate of the resin sheet having spin patterns transferred, design characters were silk printed so as to be transparent. The specular ink was used for the silk printing such that the area other than the design characters was specular surface.

### INDUSTRIAL APPLICABILITY

The present invention provides a resin sheet on which fine decorative patterns are formed. The resin sheet having fine patterns formed may be suitably used in an instrument panel, display panel, in particular the meter panel and display panel equipped in motorcycles, automobiles and electric and electronic devices, a housing of electric and electronic devices, dial display panel of clocks, advertising display and the like. The resin sheet having fine decorative patterns in accordance with the present invention is characterized in its scratch resistant, light weight, and crack resistant property, which is applicable in a wide field of industry.

## Claims

1. A resin sheet having fine decorative patterns, consisted of a transparent resin sheet, and a three dimensional cured resin layer laminated thereon, comprising:
said three dimensional cured resin layer having fine decorative patterns formed thereon.

2. A resin sheet having fine decorative patterns in accordance with claim 1, in which:
said fine decorative patterns are of woodgrain or characters.

3. A resin sheet having fine decorative patterns in accordance with claim 1, in which:
said fine decorative patterns are of line art drawn by a plurality of lines.

4. A resin sheet having fine decorative patterns in accordance with claim 3, in which:
said line art patterns are consisted of a plurality of similar figures drawn by lines.

5. A resin sheet having fine decorative patterns in accordance with claim 4, in which:
the fundamental pattern of said similar figures is of closed line drawing includes circle, ellipse, triangle, quadrilateral, pentagon, polygon, and star.

6. A resin sheet having fine decorative patterns in accordance with claim 5, in which:
each side of said closed line drawing includes circle, ellipse, triangle, quadrilateral, pentagon, polygon, and star, and line drawings is drawn by a straight line, outwardly convex arc, or inwardly concave arc.

7. A resin sheet having fine decorative patterns in accordance with claim 3, in which:
said line drawing patterns are spin patterns or hairline patterns.

8. A resin sheet having fine decorative patterns in accordance with claim 3 or claim 4, in which:
said line drawing patterns are very fine line drawing patterns drawn by a plurality of lines having the depth of line groove of 20 nm to 5 microns.

9. A resin sheet having fine decorative patterns in accordance with claim 1, in which:
said three dimensional cured resin layer is consisted of three dimensional cure resin cured by the radiation of exciting line such as UV light and X-ray, or by the heat.

10. A resin sheet having fine decorative patterns in accordance with claim 1, in which:
said transparent resin sheet is selected from the group consisted of acryl sheet, polycarbonate sheet, polyester sheet, and polystyrene sheet.

11. A resin sheet having fine decorative patterns in accordance with claim 1, in which:
characters and numbers are transparently printed by silk printing on said transparent resin sheet.

12. A resin sheet having fine decorative patterns in accordance with claim 1 or claim 11, in which:
the surface of said transparent resin sheet is tinted by silk printing.

13. A resin sheet having fine decorative patterns in accordance with claim 1, in which:
characters and numbers are transparently printed by silk printing with mirror ink of silver and/or gold on said three dimensional cured resin layer.

14. A resin sheet having fine decorative patterns in accordance with claim 13, in which:
characters and numbers are transparently printed by silk printing with mirror ink of silver and/or gold on said three dimensional cured resin layer, and the surface of said transparent resin sheet is hard coated.

15. A resin sheet having fine decorative patterns in accordance with claim 1, in which:
metal is deposited on the surface of said transparent resin sheet, metal deposition film is then partly eliminated by laser beam to make characters and numbers transparent.

16. A resin sheet having fine decorative patterns in accordance with claim 1, in which:
said sheet is used in an instrument panel, indicator panel, and the like.

17. A resin sheet having fine decorative patterns in accordance with claim 16, in which:
said instrument panel and indicator panel are readably illuminated by a backlight from the backside.

18. A resin sheet having fine decorative patterns in accordance with claim 16 or claim 17, in which:
said instrument panel and indicator panel are those equipped in motorcycles, automobiles, and electric and electronic devices.

19. A resin sheet having fine decorative patterns in accordance with claim 1, in which:
said sheet is used in a housing of electric and electronic devices, dial display panel of clocks, and advertising displays.

20. A resin sheet having fine decorative patterns in accordance with claim 18 or claim 19, in which:
said electric and electronic devices are cellular phones.

21. A method of producing a resin sheet having fine decorative patterns, comprising the steps of:
stacking a metal plate having decorative patterns , three dimensional cure coating, and a transparent resin sheet in this order; curing said three dimensional cure coating; then peeling off from said metal plate.

22. A method of producing a resin sheet having fine decorative patterns, in accordance with claim 21, in which said step of curing said three dimensional cure coating comprising the substep of:
curing from the side of the transparent resin sheet by the radiation of excitation rays such as X-ray and UV light or by heating.

23. A method of producing a resin sheet having fine decorative patterns, in accordance with claim 21 or claim 22, in which:
said transparent resin sheet is selected from the group consisted of acrylic sheet, polycarbonate sheet, polyester sheet, and polystyrene sheet.

24. A method of producing a resin sheet having fine decorative patterns, in accordance with claim 21, in which:
said metal plate is selected from the group consisted of aluminum plate, copper plate, stainless steel plate, and iron plate.

25. A method of producing a resin sheet having fine decorative patterns, in accordance with claim 22, in which:
said three dimensional cure coating is UV cure resin.

26. A method of producing a resin sheet having fine decorative patterns, in accordance with claim 25, in which:
said UV cure coating includes origomers (resin) of urethane acrylate and monomers of acrylate.
